# EUROPÄISCHE PATENTSCHRIFT

(11) **EP 2 784 220 B1**
(45) Veröffentlichungstag und Bekanntmachung des Hinweises auf die Patenterteilung: **09.09.2015**
(21) Anmeldenummer: 13001633.0
(22) Anmeldetag: 28.03.2013
(51) Int. Cl.: E01D 19/04

(54) **Topflager**
Pot bearing
Appui à pot

(43) Veröffentlichungstag der Anmeldung: 01.10.2014
(73) Patentinhaber: Mageba S.A., 8180 Bülach (CH)
(72) Erfinder: Urich, Bernd, 8193 Eglisau (CH); Hoffmann, Simon, 78462 Konstanz (DE); Spuler, Thomas, 8173 Neerac (CH)
(74) Vertreter: Grättinger Möhring von Poschinger Patentanwälte Partnerschaft

(56) Entgegenhaltungen:
- EP-A1- 0 333 893
- WO-A1-2006/042571
- DE-A1-102008 017 323
- DE-B1- 2 725 621

## Beschreibung

Die vorliegende Erfindung betrifft ein Topflager zur zwängungsarmen Aufnahme von Rotationen mit einem Topf, einem darin aufgenommenen Elastomerkissen und einem sich auf diesem abstützenden, zumindest teilweise in den Topf hineinragenden Deckel, wobei das Elastomerkissen unterhalb des Deckels randseitig mittels einer umlaufenden Innendichtung, welche bevorzugt aus miteinander verketteten Kettengliedern besteht, gleitend gegenüber dem Topf abgedichtet ist.

Topflager der vorstehenden Art sind insbesondere für bautechnische Anwendungen bekannt und im Einsatz. Sie ermöglichen, was sie diversen anderen herkömmlichen Lagern überlegen macht, bei einer besonders kompakten Bauweise eine zur Übertragung hoher Lasten geeignete Abstützung eines getragenen Bauteils auf einem tragenden Bauteil bei sich - innerhalb gewisser Grenzen - ändernden Neigungen der beiden Bauteile zueinander, insbesondere durch Kippen ("Rotation") des Deckels relativ zum Topf. Einschlägig für bautechnische Anwendungen von Topflagern ist die DIN "Lager im Bauwesen - Teil 5: Topflager", d.h. die DIN EN 1337-5. Auch die Patentliteratur befasst sich mit der Ausführung von Topflagern, so beispielsweise die DE 2725621 C2, die DE 102008017323 A1 oder die EP 0333893 A1.

Um zu ermöglichen, dass sich der Deckel gegenüber dem Topf neigen (d.h. um eine i.a. horizontale Achse kippen bzw. "rotieren") kann, ist zwischen dem Deckel und dem Topf zwingend ein umlaufender ringförmiger Spalt vorzusehen. Gerade bei besonders hoch belasteten Topflagern kommt, damit das Elastomerkissen nicht durch jenen Ringspalt hindurch fließt bzw. aus dem zugeordneten Hohlraum heraus gepresst wird, der randseitigen Abdichtung des Elastomerkissens gegenüber dem Topf unterhalb des Deckels eine besondere Bedeutung zu. Nach der einschlägigen Norm (DIN EN 1337-5) kommen als Werkstoff für die betreffende Innendichtung Messing, Polyoxymethylen (POM), kohlegefülltes PTFE und nichtrostender Stahl in Betracht. Im Falle der Verwendung von POM gibt die Norm vor, eine aus einzelnen ineinander greifenden Elementen bestehende POM-Dichtungskette vorzusehen, wobei das zu verwendende POM eine Dichte (nach ISO 1183) von 1410kg/m³ +/- 20kg/m³, einen Schmelzindex MFI 190/2, 16 (nach EN ISO 1133) von (berichtigt!) 10g/10min +/- 2g/10min, eine Zugfestigkeit (nach EN ISO 527-2) von >= 62N/mm² und eine Reißdehnung (nach EN ISO 527/2) von >= 30% aufzuweisen hat. Vorgeschlagen wurde alternativ weiterhin die Herstellung der in Rede stehenden Innendichtung aus UHMWPE (vgl. WO 2006/042571 A1).

Die vorliegende Erfindung hat sich zur Aufgabe gesetzt, ein Topflager der eingangs angegebenen Art bereitzustellen, das sich durch eine gegenüber den normgemäßen Lagern mit POM Innendichtung weiter gesteigerte Leistungsfähigkeit auszeichnet.

Gelöst wird diese Aufgabenstellung gemäß der vorliegenden Erfindung durch ein gattungsgemäßes Topflager, bei dem die Innendichtung, d.h. insbesondere ein (ggf. aus mehreren Segmenten bestehender) Innendichtungsring bzw. die miteinander verketteten Kettenglieder einer Dichtungskette, ganz oder zumindest überwiegend aus Polyoxymethylen mit einem Schmelzindex (MFI 190/2, 16)

von weniger als 6g/10min besteht. Durch die Angabe: "überwiegend aus Polyoxymethylen ..." kommt dabei insbesondere zum Ausdruck, dass beispielsweise in einen Innendichtungsring ein Strukturbauteil aus einem anderen Material (z.B. eine Seele aus Karbonfaser oder dergl.) eingebettet sein kann. In besonders bevorzugter Weiterbildung beträgt der Schmelzindex (MFI 190/2, 16) des Polyoxymethylens des Innendichtungsrings bzw. der miteinander verketteten Kettenglieder der Innendichtung weniger als 4g/10min.

Die vorliegende Erfindung baut auf der Erkenntnis auf, dass es für die Leistungsfähigkeit von Topflagern der hier in Rede stehenden Art, noch ausgeprägter und vielschichtiger als dies bisher bedacht wurde, ganz besonders auf die Ausführung der fraglichen Innendichtung ankommt. Insoweit berücksichtigt die vorliegende Erfindung insbesondere die Erkenntnis, dass verschiedenste praxisrelevante Eigenschaften und Charakteristika von Topflagern unmittelbar oder zumindest mittelbar in einem Zusammenhang stehen mit der Ausführung der fraglichen Innendichtung. Dies gilt insbesondere, aber nicht nur (s.u.), für die Lebensdauer des Topflagers, für welche wiederum der zulässige aufsummierte Gleitweg der Dichtung (an dem Topf) ein Kriterium darstellt. Nun ist allerdings der Gleitweg (bei einem betrachteten Kipp- bzw. Rotationswinkel wie beispielsweise +/- 0,0035; vgl. H. Eggert et al., Lager im Bauwesen, 2. Auflage) umso größer, je größer der Durchmesser des Topfes ist. Das hat hinwiederum zur Folge, dass, wenn die Innendichtung den maximal zulässigen Druck (d.h. die maximal zulässige Flächenpressung) innerhalb des Elastomerkissens vorgibt, für größere Lasten der Durchmesser des Topfes entsprechend vergrößert werden muss, was sich allerdings wegen der proportional hierzu anwachsenden Gleitwege beim Kippen des Deckels gerade bei Hochleistungs-Topflagern lebensdauermindernd (im Sinne einer reduzierten Anzahl zulässiger Kippbewegungen) auswirkt. Im Übrigen sind für diverse praktische Anwendungen auch weitere von der Ausführung der Innendichtung abhängige Größen von Relevanz, wie insbesondere Rückstellkräfte bzw. Rückstellmomente bei Kippung des getragenen Bauteils (vgl. H. Eggert et al., a.a.O.).

In Anwendung der vorliegenden Erfindung, d.h. bei der Verwendung von einen Schmelzindex (MFI 190/2, 16) von weniger als 8g/10min aufweisendem Polyoxymethylen für die Herstellung der Innendichtung von gattungsgemäßen Topflagern, lassen sich Innendichtungen bereitstellen, die signifikant vergrößerten Drücken innerhalb des Elastomerkissens standhalten und bei dementsprechend erhöhten Lagerlasten ihre Dichtfunktion zuverlässig erfüllen, und das bei jedenfalls nicht verschlechterten sondern typischerweise sogar ihrerseits verbesserten direkten Gleiteigenschaften der Paarung Innendichtung-Topf. Die vergrößerten zulässigen Drücke innerhalb des Elastomerkissens gestatten es, für höchste Lasten ausgelegte Topflager kompakter auszuführen als in konstruktiver Umsetzung der DIN EN 1337-5. Dies ist nicht nur von Haus aus ein gravierender anwendungstechnischer Vorteil und wirkt sich zudem günstig auf Gewicht und Herstellungskosten aus. Auch ergibt sich bei einer vorgegebenen Anzahl von Kippungen des Deckels um definierte Kippwinkel ein geringerer aufsummierter Gleitweg der Innendichtung an dem Topf. Letzteres wirkt sich lebens- bzw. nutzungsdauersteigernd aus. Dass überdies in Anwendung der vorliegenden Erfindung der zulässige aufsummierte Gleitweg für die Innendichtung substantiell über dem nach der DIN EN 1337-5 liegen kann, und zwar bei gegenüber den zulässigen Lasten nach der DIN EN 1337-5 gesteigerten Lasten auf das Lager und dementsprechend höheren Flächenpressungen innerhalb des Elastomerkissens, was zunächst infolge der höheren Anpresskraft der Innendichtung an den Topf eher auf einen höheren als auf einen geringeren Verschleiß der Innendichtung schließen ließe, kommt noch hinzu. Dass sich POM mit einem gegenüber der DIN EN 1337-5 substantiell reduzierten Schmelzindex für die wirksame Abdichtung von Topflagern eignet, die substantiell höher belastet werden als nach der DIN EN 1337-5 vorgesehen, überrascht durchaus auch angesichts dessen, dass sich die aus dem erfindungsgemäß eingesetzten Material hergestellte Innendichtung aufgrund des geringeren Schmelzindex' weniger gut an den Topf anschmiegt. Als weiterer Aspekt, der sich jedenfalls bei diversen Anwendungen als praxisrelevanter Vorteil erweist, ist zu nennen, dass sich bei den in Umsetzung der vorliegenden Erfindung möglichen besonders hohen Flächenpressungen innerhalb des Elastomerkissens - entgegen den landläufigen Vorstellungen von der Inkompressibilität des Elastomerkissens - reproduzierbare, technisch nutzbare Nachgiebigkeiten des Topflagers nachweisen lassen, d.h. ein gewisses lastabhängiges Einfedern des Deckels. Dies ist infolge einer dämpfenden Charakteristik des Ein- und Ausfederns nützlich bei verschiedenen, dynamischen Lastwechseln ausgesetzten Lageraufgaben, wie beispielsweise bei Lagern für Eisenbahnbrücken. Ein bestimmtes, beabsichtigtes Einfedern des Deckels lässt sich dabei in Umsetzung der vorliegenden Erfindung, verglichen mit normgemäß ausgeführten, weniger stark belastbaren Topflagern, bereits bei geringeren Höhen des Elastomerkissens erreichen. Die entsprechende Reduktion der Bauhöhe ist ersichtlich von großem Vorteil, insbesondere weil hierdurch der Anwendungsbereich von Topflagern der hier in Rede stehenden Bauweise deutlich erweitert wird. Im Zusammenhang mit dem gezielten Einsatz des Einfederns des Deckels kommt wiederum, da insoweit ergänzend zu den Kippbewegungen des Deckels ein Gleiten der Innendichtung an dem Topf erfolgt und einen weiteren Beitrag zum gesamten aufsummierten Gleitweg leistet, das bereits erwähnte verbesserte Gleit- bzw. Verschleißverhalten des erfindungsgemäß eingesetzten Innendichtungs-Materials zum Tragen. Das reproduzierbare lastabhängige Einfedern des Deckels lässt sich wiederum nutzen für eine vorgespannte Einbausituation des erfindungsgemäßen Topflagers, d.h. den Einsatz in Anwendungen, bei denen bei einem bestimmten Maß der Bauteile zueinander eine vorgegebene Lagerkraft wirken bzw. übertragen werden soll.

Die aufgezeigten Vorteile des erfindungsgemäßen Topflagers gelten im Übrigen nicht nur im Hinblick auf die bzw. gegenüber der DIN EN 1337-5. Entsprechendes gilt vielmehr auch im Hinblick auf anderenorts geltende Standards, die in wesentlichen Punkten (insbesondere der zulässigen Flächenpressung innerhalb des Elastomerkissens) den Vorgaben der DIN EN 1337-5 vergleichbar sind.

Allein zur Klarstellung wird nochmals festgehalten, dass die vorliegende Erfindung nicht auf bestimmte konstruktive Ausführungen der Innendichtung beschränkt ist sondern vielmehr diverse Gestaltungen erfasst, wie beispielsweise die Ausführung als einteiliger Dichtungsring, als aus mehreren Segmenten zusammengefügter Dichtungsring, als aus miteinender verketteten Kettengliedern bestehende Dichtungskette und dergl.

In besonders ausgeprägtem Maße lassen sich die vorstehend dargelegten Vorteile erreichen, wenn zur Herstellung der Innendichtung Polyoxymethylen mit einem Schmelzindex (MFI 190/2, 16) von weniger als 4g/10min verwendet wird.

Im Sinne der vorstehenden Erläuterungen der vorliegenden Erfindung und der mit dieser verbundenen Vorteile zeichnet sich eine erste bevorzugte Weiterbildung des erfindungsgemäßen Topflagers dadurch aus, dass die zulässige Flächenpressung des Elastomerkissens größer ist als der nach DIN EN 1337-5 festgelegte und geprüfte Normwert. Besonders bevorzugt dichtet die Innendichtung erfindungsgemäßer Topflager eine Flächenpressung des Elastomerkissens bis zum 2-fachen des maximalen Normwerts nach DIN EN 1337-5 ab. In diesem Sinne konnte eine zulässige Belastbarkeit von Topflagern gemäß der vorliegenden Erfindung von sogar mehr als 120 N/mm² nachgewiesen werden, ohne dass sich nachteilige Auswirkungen auf die Funktion und/oder Lebensdauer eingestellt haben. Gemäß einer anderen bevorzugten Weiterbildung ist, ebenfalls im Sinne der vorstehenden Erläuterungen der vorliegenden Erfindung und der mit dieser verbundenen Vorteile, der zulässige aufsummierte Gleitweg der Innendichtung größer als der nach DIN EN 1337-5 festgelegte und geprüfte Normwert, und zwar besonders bevorzugt bis zum 1,6-fachen des maximalen Normwerts nach DIN EN 1337-5. In diesem Sinne führte bei Topflagern gemäß der vorliegenden Erfindung selbst im Falle der weiter oben dargelegten großen Lasten von sogar mehr als 120 N/mm² ein aufsummierte Gleitweg der Dichtung von über 3.200m nicht zu erkennbaren Schädigungen. Beide Charakteristika lassen sich in Anwendung der vorliegenden Erfindung, d.h. unter Verwendung von Polyoxymethylen mit einem Schmelzindex (MFI 190/2, 16) von weniger als 6g/10min für die Herstellung der Innendichtung erzielen.

Auch hinsichtlich weiterer, mit der Innendichtung in Beziehung stehender Eigenschaften ist das Topflager nach der vorliegenden Erfindung solchen nach der DIN EN 1337-5 überlegen. So profitiert eine gesteigerte Zuverlässigkeit davon, dass das erfindungsgemäß zur Herstellung der Innendichtung verwendete Material eine höhere Zugfestigkeit und/oder eine höhere Reißdehnung aufweisen kann als das nach der DIN EN 1337-5 vorgesehene POM. In diesem Sinne zeichnen sich bevorzugte Weiterbildungen der vorliegenden Erfindung dadurch aus, dass ein solches POM mit einem Schmelzindex (MFI 190/2, 16) von weniger als 6g/10min zum Einsatz kommt, dessen Zugfestigkeit (EN ISO 527-2) mindestens 62N/mm² und/oder dessen Reißdehnung (EN ISO 527-2) mindestens 45% beträgt.

Das erfindungsgemäß für die Herstellung der Innendichtung eingesetzte Material zeichnet sich im Übrigen durch ein besonders günstiges Temperaturverhalten aus in dem Sinne, dass eine vergleichsweise geringe Abhängigkeit der charakteristischen Eigenschaften von der Temperatur vorliegt. In diesem Sinne zeichnet sich eine wiederum andere bevorzugte Weiterbildung der vorliegenden Erfindung dadurch aus, dass die in der DIN EN 1337-5 definierten Anforderungen bei einer Temperatur von -40°C bis +50°C erfüllt werden. Dies macht erfindungsgemäße Topflager mit besonderem Vorteil anwendbar in Umgebungen mit außergewöhnlichen Temperaturbedingungen.

Im Sinne weiterhin verbesserter Betriebseigenschaften des erfindungsgemäßen Topflagers (insbesondere hinsichtlich Ansprechverhalten, Verschleiß und Rückstellmomenten) zeichnet sich eine wiederum andere bevorzugte Weiterbildung der vorliegenden Erfindung dadurch aus, dass die Innendichtung zumindest im Bereich der Dichtfläche gegenüber dem Topf mit Silikonfett, insbesondere zur Anfangsschmierung, versehen ist. Besonders günstig ist dabei die Verwendung eines lithiumverseiften Silikonöls auf Basis von Methylphenylsilikonöl. Im Hinblick auf die hier vorliegende Verwendung kommen besonders bevorzugt Silikonfette zum Einsatz mit mindestens einer der nachstehenden Eigenschaften: Tropfpunkt > 200°C nach DIN ISO 2176 und/oder Walkpenetration von 20-35mm, insbesondere 25-30mm, vorzugsweise 26,5-29,5mm nach DIN ISO 2137 und/oder Fließdruck von < 200hPa bei 20°C nach DIN 51805 und/oder eine Ölabscheidung von < 1,5%, insbesondere < 1% bei 40°C und 18 Stunden Dauer nach DIN 51817.

Was die Anbindung der Innendichtung an das Elastomerkissen angeht, so kommen im Rahmen der vorliegenden Erfindung hierfür mehrere technische Möglichkeiten in Betracht. So kann, gemäß einer insoweit ersten bevorzugten Weiterbildung, die Innendichtung in das Elastomerkissen ein- oder an dieses anvulkanisiert sein. Insbesondere das Einvulkanisieren der Innendichtung in das Elastomerkissen wirkt sich im Sinne einer besonders hohen Lebensdauer aus. In herstellungstechnischer Hinsicht kann unter bestimmten Voraussetzungen indessen günstiger sein, die Innendichtung - gemäß einer insoweit zweiten bevorzugten Weiterbildung der Erfindung - mittels eines Klebers mit dem Elastomerkissen zu verbinden. Gemäß einer insoweit wiederum anderen, dritten bevorzugten Weiterbildung ist die Innendichtung in eine elastomere Leiste einvulkanisiert, die ihrerseits um das Elastomerkissen gelegt ist. Dies gestattet unter bestimmten Voraussetzungen eine - bei einer direkten Anbindung der Innendichtung an das Elastomerkissen ggf. nicht mögliche - Optimierung des Topflagers im Hinblick auf sowohl herausragende Eigenschaften des Elastomerkissens als auch eine hervorragende Fixierung der Innendichtung an diesem.

Die mit der vorliegenden Erfindung verbundenen Vorteile (siehe oben) kommen namentlich dann in ganz besonderer Weise zum Tragen, wenn bei dem Topflager um zwei zueinander orthogonale horizontale Achsen unterschiedliche Rückstellmomente bestehen, wie dies für eine Reihe von Anwendungen attraktiv ist. Dies lässt sich insbesondere erreichen durch eine Ausführung des Topfes mit einem unrunden, insbesondere einem ovalen Querschnitt. Eine solche Ausführung des Topflagers mit einem unrunden Querschnitt ist - insbesondere im Falle der bevorzugten Ausführung der Innendichtung aus einer Abfolge von miteinander verketteten Kettengliedern - im Rahmen der vorliegenden Erfindung problemlos möglich. Die besonderen Vorteile von Topflagern mit unterschiedlichen Rückstellmomenten in zwei zueinander orthogonalen horizontalen Achsen zeigen sich in Anwendungen mit unterschiedlichen Anforderungen an das Kippverhalten in verschiedenen Richtungen, wie sie in der Praxis (z.B. im Brückenbau) vergleichsweise häufig sind. Unrunde Töpfe in dem vorstehend dargelegten Sinne erlauben insbesondere die Bereitstellung eines besonders günstigen Last/Verschleiß-Verhältnisses, indem die Dimension des Topfes in der Richtung der primären Kippbewegung des Deckels geringer ist als quer hierzu, so dass bei einer - im Hinblick auf die abzutragenden Lasten - hinreichend großen Querschnittsfläche des Elastomerkissens bei vorgegebenen anzunehmenden Kippbewegungen der Gleitweg minimiert ist, wobei die unrunde Ausführung des Topfes zudem die Anpassung der Lagergeometrie an die jeweilige Einbausituation erlaubt. Dies macht das erfindungsgemäße Topflager prädestiniert für den Einsatz bei Sanierungsaufgaben, bei denen ein verschlissenes oder defektes Lager ohne Eingriff in die Geometrie der Bauteile, d.h. unter Nutzung der bisherigen Einbausituation gegen ein neues, höchste technische Anforderungen erfüllendes, hoch belastbares Lager auszutauschen ist.

Eine wiederum andere bevorzugte Weiterbildung der vorliegenden Erfindung zeichnet sich dadurch aus, dass das Elastomerkissen ringförmig ist und eine Kernstruktur umgibt, welche einen festen Bestandteil des Topfes bildet. Die Kernstruktur kann dabei insbesondere hohl ausgeführt sein, was namentlich die Durchführung von mechanischen Komponenten durch das Lager hindurch ermöglicht, wie insbesondere die Durchführung von Zuggliedern, welche als Aushebesicherung wirken. Solche

(ggf. vorgespannten) Zugglieder verhindern beim möglichen Auftreten abhebender Kräfte auf das Lager ein unzulässig weites Heben des Deckels. In Betracht kommt bei solchen hohlen Kernstrukturen in gleicher Weise aber auch die Durchführung von Leitungen beliebiger Art und Funktion durch das Topflager, z.B. von mit einem Sensor bzw. Fühler verbundenen Messleitungen. Eine gegebenenfalls radial innen an einem solchen ringförmigen Elastomerkissen vorgesehene, der Abdichtung gegenüber der Kernstruktur wirkende Dichtung kann ihrerseits ganz oder zumindest überwiegend aus Polyoxymethylen mit einem Schmelzindex von weniger als 6g/10m bestehen. Die sich in diesem Falle ergebenden Vorteile entsprechen jenen, wie sie vorstehend im Zusammenhang mit der entsprechenden Ausführung der Innendichtung dargelegt wurden. Hierauf wird zur Vermeidung von Wiederholungen verwiesen.

Für diverse typische Anwendungen, beispielsweise im Brückenbau, weist das erfindungsgemäße Topflager - gemäß einer abermals anderen bevorzugten Weiterbildung - eine zusätzliche Gleitfläche, insbesondere mit einem Gleitwerkstoff hohen Pressungswiderstands und hoher Gleitbeständigkeit auf. Die zusätzliche Gleitfläche stellt je nachdem, ob eine Führung vorgesehen ist oder aber nicht, einen zusätzlichen Freiheitsgrad bzw. zwei zusätzliche Freiheitsgrade bereit, insbesondere für eine Verschiebung der beiden Bauwerksteile relativ zueinander beispielsweise in Folge von Dehnungen. Insbesondere für eben grade diese Anwendungen, die typischerweise mit besonders hohen Lasten einhergehen und besonders langlebiger und zuverlässiger Lager bedürfen, stellt die vorliegende Erfindung in höchstem Maße geeignete Topflager bereit. Namentlich in dieser Weiterbildung ist das erfindungsgemäße Topflager prädestiniert, um - im Sinne des weiter oben angesprochenen Einsatzes der Bauwerkssanierung - ein verschlissenes oder versagensgefährdetes Brücken-Rollenlager zu ersetzen.

Gemäß einer abermals anderen bevorzugten Weiterbildung der Erfindung ist das Topflager als Hublager ausgeführt, indem in dem Topf - im Sinne der Europäischen technischen Zulassung ETA-11/0453 - unterhalb des Elastomerkissens ein über einen Befüllkanal mit aushärtender Füllmasse beschickbarer Raum angeordnet ist. Über den Grad der Befüllung des besagten Raumes mit Füllmasse lässt sich die Höhe des Lagers einstellen, d.h. an die spezifischen Anforderungen anpassen. Dies ist ein vorteilhafter Gesichtspunkt insbesondere wiederum in Anwendungen, in denen ein bestehendes Lager durch ein solches nach der vorliegenden Erfindung ersetzt werden soll und das Topflager somit - ohne großen Aufwand - an die spezifische Einbausituation anzupassen ist. Im Zusammenhang mit solchen Hublagern kommt im Übrigen wieder der weiter oben erläuterte besondere Aspekt der Nachgiebigkeit des erfindungsgemäßen Topflagers zum Tragen. Denn das Topflager kann ohne Eingriff in die umgebende Struktur vorgespannt eingebaut werden, indem nach der Montage der unterhalb des Elastomerkissens angeordnete Raum mit einem solchen Druck mit aushärtender Füllmasse beschickt wird, dass sich innerhalb des Elastomerkissens die angestrebte Vorspannung einstellt.

Zur Erläuterung bzw. Verdeutlichung verschiedener für Topflager geltender struktureller Eigenschaften bzw. Beziehungen, auf welche vorstehend abgestellt wird, sind verschiedene Ausführungsvarianten von Topflagern, im Zusammenhang mit denen die vorliegende Erfindung zum Einsatz kommen kann, in der Zeichnung veranschaulicht.

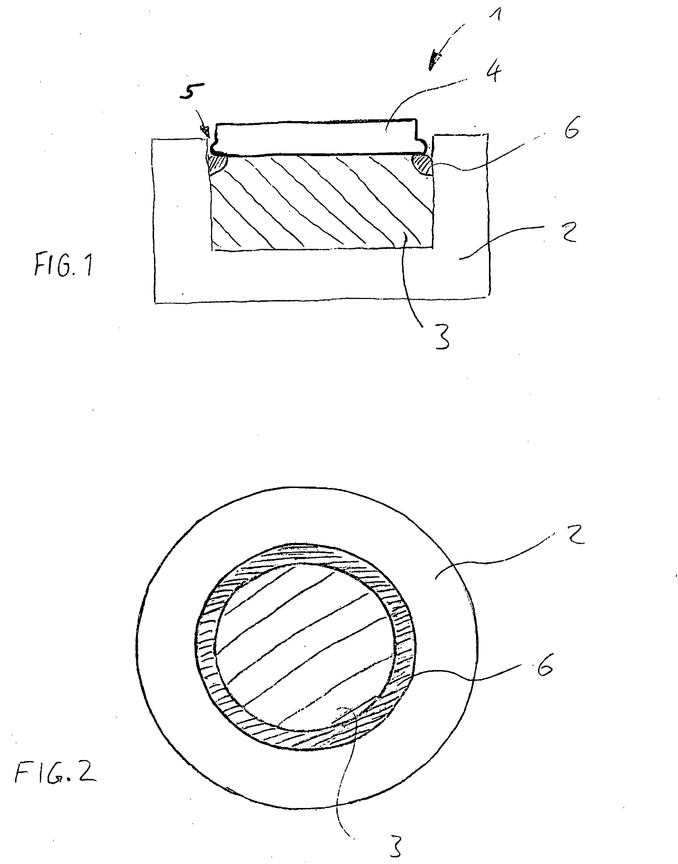

Fig. 1 stellt einen Vertikalschnitt durch ein Topflager 1 in einer ersten Bauweise dar, die sich zur Umsetzung der vorliegenden Erfindung eignet. Dabei bezeichnet 2 den Topf, 3 das Elastomerkissen (Elastomerkörper), 4 den Deckel, 5 den Ringspalt zwischen Topf 2 und Deckel 4 und 6 die Innendichtung. Fig. 2 zeigt das Topflager 1 nach Fig. 1 in der Draufsicht von oben bei abgenommenem Deckel 4.

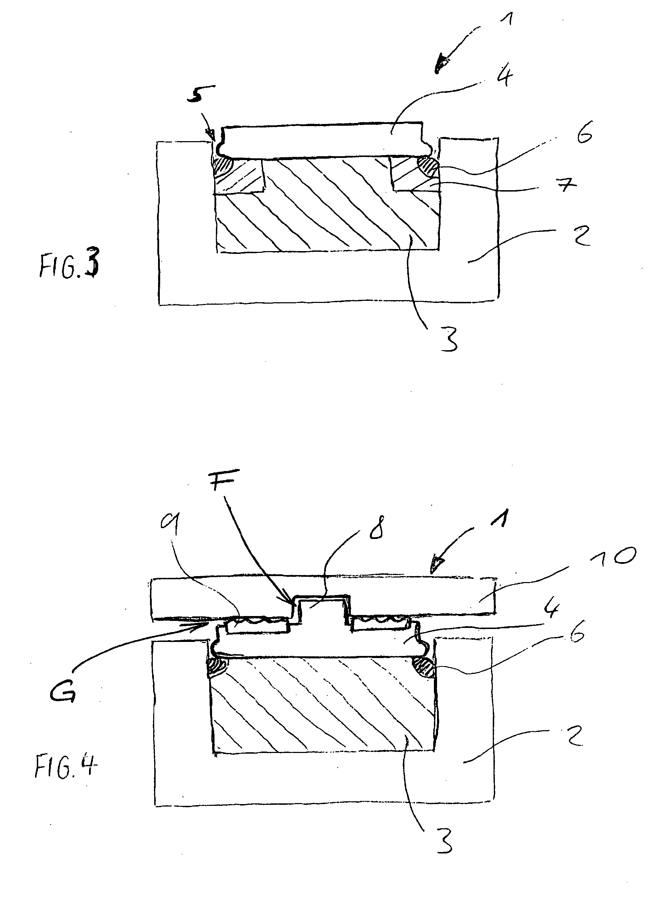

Fig. 3 veranschaulicht zu dem in den Fig. 1 und 2 gezeigten Topflager 1 eine solche Abwandlung, bei der die Innendichtung 6 in eine elastomere Leiste 7, welche um das Elastomerkissen 3 herum gelegt ist, eingelegt bzw. einvulkanisiert ist.

Fig. 4 veranschaulicht zu dem in den Fig. 1 und 2 gezeigten Topflager 1 eine solche Abwandlung, bei der eine zusätzliche Gleitfläche G mit genau einem Freiheitsgrad vorgesehen ist. Dabei bezeichnet 8 die an dem Deckel 4 vorgesehene Führungsleiste, die als Innenführung F für die Gleitplatte 10 dient. Zwischen dem Deckel 4 und der Gleitplatte 10 ist in als solches bekannter Weise ein Gleitpartner 9 angeordnet.

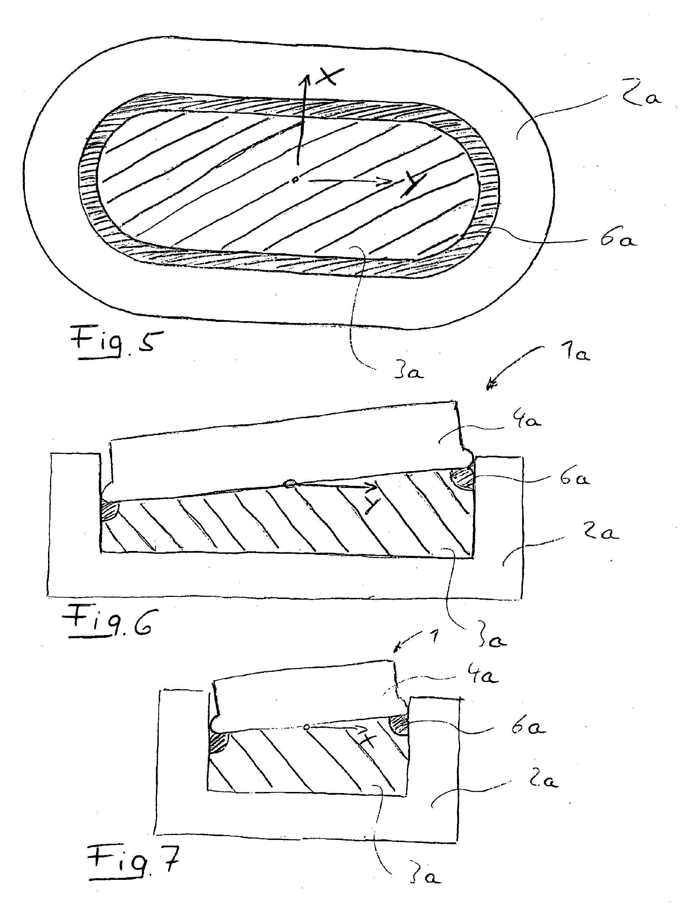

Die Fig. 5, 6 und 7 veranschaulichen zu dem in den Fig. 1 und 2 gezeigten Topflager 1 eine solche Abwandlung, bei der der Topf 2a des Topflagers la eine ovale Form hat, d.h. einen ovalen Querschnitt aufweist. Demgemäß hat auch das Elastomerkissen (der Elastomerkörper) 3a eine ovale Form; und an der Oberkante des Elastomerkissens 3a erstreckt sich eine ovale Dichtung 6a. Bei gleicher Verdrehung ("Kippen") um die X- bzw. die Y-Achse wird aufgrund des unterschiedlichen Hebelarmes das Elastomerkissen 3a unterschiedlich stark gestaucht bzw. gewalkt; und der Gleitweg der Innendichtung 6a an dem Topf ist unterschiedlich.

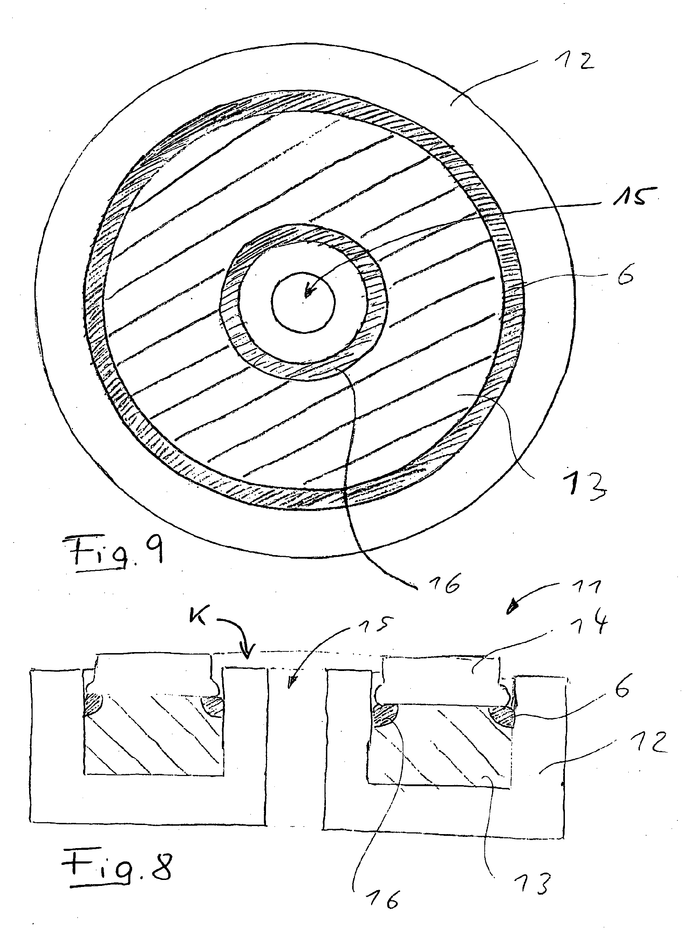

Die Fig. 8 und 9, bei denen Fig. 9 wiederum eine Draufsicht von oben auf das in Fig. 8 in einem Vertikalschnitt gezeigte Topflager 11 bei abgenommenem Deckel darstellt, veranschaulichen zu dem in den Fig. 1 und 2 gezeigten Topflager 1 eine solche Abwandlung, bei der der Topf ringförmig ausgebildet ist, d.h. einen Ringtopf 12 bildet. Demgemäß ist auch der Deckel ringförmig ausgebildet und bildet einen Ringdeckel 14. Die Kernstruktur K ist hohl, d.h. in Form eines Rohres ausgeführt, so dass das Topflager 11 eine Durchdringung 15 aufweist. Das Topflager 11 weist zusätzlich zu der Innendichtung 6 eine weitere ringförmige Dichtung 16 auf, die das (ringförmige) Elastomerkissen 13 gegenüber der rohrförmigen Kernstruktur K abdichtet.

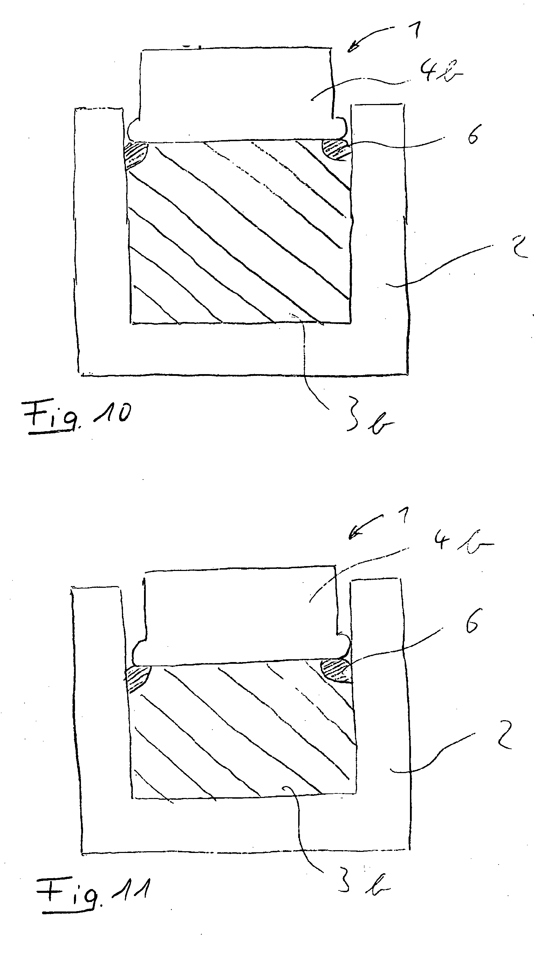

Die Fig. 10 und 11 veranschaulichen die - bei den hier in Betracht kommenden hohen Lasten auf das Topflager 1 - bestehende Möglichkeit des Einfederns des Deckels 4 unter einer reproduzierbaren Kompression des Elastomerkissens 3b, wobei das Lager in Fig. 10 im unbelasteten und in Fig. 11 im belasteten Zustand (bei einer Flächenpressung im Elastomerkissen von 120N/mm²) gezeigt ist. Um diesen Effekt technisch zu nutzen, weist der Deckel 4b eine größere Höhe (Dicke) auf als bei dem Topflager nach Fig. 1.

## Patentansprüche

1. Topflager (1) zur zwängungsarmen Aufnahme von Rotationen mit einem Topf (2, 2a, 12), einem darin aufgenommenen Elastomerkissen (3, 3b, 13) und einem sich auf diesem abstützenden, zumindest teilweise in den Topf hineinragenden Deckel (4, 4b, 14), wobei das Elastomerkissen (3, 3b, 13) unterhalb des Deckels randseitig mittels einer umlaufenden Innendichtung (6), welche bevorzugt aus miteinander verketteten Kettengliedern besteht, gleitend gegenüber dem Topf (2, 2a, 12) abgedichtet ist, **dadurch gekennzeichnet, dass** die Innendichtung (6) ganz oder zumindest überwiegend aus Polyoxymethylen mit einem Schmelzindex (MFI 190/2,16) von weniger als 6g/10min besteht.

2. Topflager nach Anspruch 1, **dadurch gekennzeichnet, dass** die zulässige Flächenpressung des Elastomerkissens (3, 3b, 13) grösser als der nach DIN EN 1337/Teil 5 festgelegte und geprüfte Normwert ist.

3. Topflager nach Anspruch 2, **dadurch gekennzeichnet, dass** die Innendichtung (6) eine Flächenpressung des Elastomerkissens (3, 3b, 13) bis zum 2-fachen des maximalen Normwertes nach DIN EN 1337/Teil 5 abdichtet.

4. Topflager nach einem der Ansprüche 1 bis 3, **dadurch gekennzeichnet, dass** der zulässige aufsummierte Gleitweg der Innendichtung (6) grösser als der nach DIN EN 1337/Teil 5 festgelegte und geprüfte Normwert ist.

5. Topflager nach Anspruch 4, **dadurch gekennzeichnet, dass** die Innendichtung (6) einen aufsummierten Gleitweg bis zum 1,6-fachen des maximalen Normwertes nach DIN EN 1337/Teil 5 aufnimmt.

6. Topflager nach einem der Ansprüche 1 bis 5, **dadurch gekennzeichnet, dass** die Forderungen nach DIN EN 1337/Teil 5 bei einer Temperatur von -40 bis +50°C erfüllt werden.

7. Topflager nach einem der Ansprüche 1 bis 6, **dadurch gekennzeichnet, dass** die Innendichtung (6) zumindest im Bereich der Dichtfläche gegenüber dem Topf (2, 2a, 12) mit Silikonfett, insbesondere zur Anfangsschmierung, versehen ist.

8. Topflager nach Anspruch 7, **dadurch gekennzeichnet, dass** das Silikonfett ein lithiumverseiftes Silikonöl auf Basis von Methylphenylsilikonöl ist.

9. Topflager nach Anspruch 7 oder Anspruch 8, **dadurch gekennzeichnet, dass** das Silikonfett folgende Eigenschaften aufweist: Tropfpunkt > 200°C nach DIN ISO 2176 und/oder Walkpenetration von 20-35mm, insbesondere 25-30mm, vorzugsweise 26,5-29,5mm nach DIN ISO 2137 und/oder Fließdruck von < 200hPa bei 20°C nach DIN 51805 und/oder eine Ölabscheidung von < 1,5%, insbesondere < 1% bei 40°C und 18 Stunden Dauer nach DIN 51817.

10. Topflager nach einem der Ansprüche 1 bis 9, **dadurch gekennzeichnet, dass** das POM der Innendichtung (6) eine Zugfestigkeit (EN ISO 527-2) von mindestens 62N/mm² und/oder eine Reißdehnung (EN ISO 527-2) von mindestens 45% aufweist.

11. Topflager nach einem der Ansprüche 1 bis 10, **dadurch gekennzeichnet, dass** die Innendichtung (6) in das Elastomerkissen (3, 3b, 13) ein- oder an dieses anvulkanisiert ist.

12. Topflager nach einem der Ansprüche 1 bis 10, **dadurch gekennzeichnet, dass** die Innendichtung (6) mittels eines Klebers mit dem Elastomerkissen (3, 3b, 13) verbunden ist.

13. Topflager nach einem der Ansprüche 1 bis 10, **dadurch gekennzeichnet, dass** die Innendichtung (6) in eine elastomere Leiste (7), die um das Elastomerkissen (3) gelegt ist, einvulkanisiert ist.

14. Topflager nach einem der Ansprüche 1 bis 13, **dadurch gekennzeichnet, dass** um zwei zueinander orthogonale horizontale Achsen (X, Y) unterschiedliche Rückstellmomente bestehen.

15. Topflager nach Anspruch 14, **dadurch gekennzeichnet, dass** der Topf (2a) einen unrunden, insbesondere einen ovalen Querschnitt aufweist.

16. Topflager nach einem der Ansprüche 1 bis 15, **dadurch gekennzeichnet, dass** das Elastomerkissen (13) ringförmig ist und eine Kernstruktur (K) umgibt.

17. Topflager nach Anspruch 16, **dadurch gekennzeichnet, dass** die Kernstruktur (K) hohl ist.

18. Topflager nach Anspruch 17, **dadurch gekennzeichnet, dass** eine mechanische Komponente, insbesondere ein Zugglied, durch das Lager hindurchgeführt ist.

19. Topflager nach einem der Ansprüche 16 bis 18,
**dadurch gekennzeichnet, dass** das Elastomerkissen (13) gegenüber der Kernstruktur (K) mittels einer umlaufenden Dichtung (16), welche bevorzugt aus miteinander verketteten Kettengliedern besteht, gleitend abgedichtet ist, wobei die Dichtung (16) ganz oder zumindest überwiegend aus Polyoxymethylen mit einem Schmelzindex von weniger als 8g/10min besteht.

20. Topflager nach einem der Ansprüche 1 bis 19, **dadurch gekennzeichnet, dass** es eine zusätzliche Gleitfläche (G), insbesondere mit einem Gleitwerkstoff hohen Pressungswiderstandes und hoher Gleitbeständigkeit umfasst.

21. Topflager nach Anspruch 20, **dadurch gekennzeichnet, dass** es eine zusätzliche Führung, insbesondere eine Innenführung (F) umfasst.

22. Topflager nach einem der Ansprüche 1 bis 21, **dadurch gekennzeichnet, dass** der zwischen dem Deckel (4, 4b, 14) und dem Topf (2, 2a, 12) bestehende Ringspalt mittels einer Dichtung, insbesondere einem an dem Deckel (4, 4b, 14) fixierten Dichtungsring gegen das Eindringen von Verunreinigungen geschützt ist.

23. Topflager nach einem der Ansprüche 1 bis 22, **dadurch gekennzeichnet, dass** es als Hublager ausgeführt ist mit einem in dem Topf unterhalb des Elastomerkissens angeordneten, über einen Befüllkanal mit aushärtender Füllmasse beschickbaren Raum.

24. Verwendung eines Topflagers nach einem der Ansprüche 1 bis 23 als Brückenlager.

## Claims

1. A pot bearing (1) for taking up rotations with little constraint, comprising a pot (2, 2a, 12), an elastomer cushion (3, 3b, 13) accommodated therein, and a cover (4, 4b, 14) supported thereon and protruding at least partially into the pot, the elastomer cushion (3, 3b, 13) being slidingly sealed relative to the pot (2, 2a, 12) below the cover on an edge side by means of a peripheral inner seal (6), which preferably consists of chain links that are chained to one another, **characterised in that** the inner seal (6) consists wholly or at least predominantly of polyoxymethylene having a melt flow index (MFI 190/2.16) of less than 6g/10min.

2. The pot bearing according to Claim 1, **characterised in that** the admissible bearing pressure of the elastomer cushion (3, 3b, 13) is greater than the standard value as defined and tested in accordance with DIN EN 1337/Part 5.

3. The pot bearing according to Claim 2, **characterised in that** the inner seal (6) seals a bearing pressure of the elastomer cushion (3, 3b, 13) up to twice the maximum standard value according to DIN EN 1337/Part 5.

4. The pot bearing according to one of Claims 1 to 3, **characterised in that** the admissible summed sliding distance of the inner seal (6) is greater than the standard value as defined and tested in accordance with DIN EN 1337/Part 5.

5. The pot bearing according to Claim 4, **characterised in that** the inner seal (6) takes up a summed sliding distance up to 1.6 times the maximum standard value according to DIN EN 1337/Part 5.

6. The pot bearing according to one of Claims 1 to 5, **characterised in that** the requirements according to DIN EN 1337/Part 5 are met at a temperature from -40 to +50 °C.

7. The pot bearing according to one of Claims 1 to 6, **characterised in that** the inner seal (6) is provided with silicone grease at least in the region of the sealing face relative to the pot (2, 2a, 12), in particular for initial lubrication.

8. The pot bearing according to Claim 7, **characterised in that** the silicone grease is a lithium saponified silicone oil based on methyl phenyl silicone oil.

9. The pot bearing according to Claim 7 or Claim 8, **characterised in that** the silicone grease has the following properties: drop point > 200 °C according to DIN ISO 2176 and/or worked penetration of 20-35 mm, in particular 25-30 mm, preferably 26.5-29.5 mm according to DIN ISO 2137 and/or flow pressure of < 200hPa at 20 °C according to DIN 51805 and/or an oil deposition of < 1.5 %, in particular < 1 % at 40 °C and 18 hours according to DIN 51817.

10. The pot bearing according to one of Claims 1 to 9, **characterised in that** the POM of the inner seal (6) has a tensile strength (EN ISO 527-2) of at least 62 N/mm² and/or an elongation at break (EN ISO 527-2) of at least 45 %.

11. The pot bearing according to one of Claims 1 to 10, **characterised in that** the inner seal (6) is vulcanised into or onto the elastomer cushion (3, 3b, 13).

12. The pot bearing according to one of Claims 1 to 10, **characterised in that** the inner seal (6) is connected to the elastomer cushion (3, 3b, 13) by means of an adhesive.

13. The pot bearing according to one of Claims 1 to 10, **characterised in that** the inner seal (6) is vulcanised into an elastomer strip (7), which is placed around the elastomer cushion (3).

14. The pot bearing according to one of Claims 1 to 13, **characterised in that** different restoring torques exist about two horizontal axes (X, Y) that are orthogonal to one another.

15. The pot bearing according to Claim 14, **characterised in that** the pot (2a) has an un-round cross section, in particular an oval cross section.

16. The pot bearing according to one of Claims 1 to 15, **characterised in that** the elastomer cushion (13) is annular and surrounds a core structure (K).

17. The pot bearing according to Claim 16, **characterised in that** the core structure (K) is hollow.

18. The pot bearing according to Claim 17, **characterised in that** a mechanical component, in particular a tension member, is guided through the bearing.

19. The pot bearing according to one of Claims 16 to 18, **characterised in that** the elastomer cushion (13) is sealed slidingly relative to the core structure (K) by means of a peripheral seal (16), which preferably consists of chain links that are chained to one another, wherein the seal (16) consists wholly or at least predominantly of polyoxymethylene having a melt flow index of less than 8g/10min.

20. The pot bearing according to one of Claims 1 to 19, **characterised in that** it comprises an additional sliding face (G), in particular comprising a sliding material of high pressing resistance and high sliding resistance.

21. The pot bearing according to Claim 20, **characterised in that** it comprises an additional guide, in particular an inner guide (F).

22. The pot bearing according to one of Claims 1 to 21, **characterised in that** the annular gap existing between the cover (4, 4b, 14) and the pot (2, 2a, 12) is protected against the infiltration of contaminations by means of a seal, in particular a ring seal fixed to the cover (4, 4b, 14).

23. The pot bearing according to one of Claims 1 to 22, **characterised in that** it is embodied as a pin bearing with a chamber which is arranged in the pot below the elastomer cushion and which can be loaded via a filling channel with curing filler.

24. Use of a pot bearing according to one of Claims 1 to 23 as a bridge bearing.

## Revendications

1. Palier en forme de pot (1) pour l'absorption à faibles contraintes de rotations avec un pot (2, 2a, 12), un coussin en élastomère (3, 3b, 13) logé dans celui-ci et avec un couvercle (4, 4b, 14) s'appuyant sur celui-ci, saillant au moins en partie dans le pot, le coussin en élastomère (3, 3b, 13) étant étanchéifié en-dessous du couvercle côté bordure au moyen d'un joint intérieur (6) périphérique, lequel est constitué de préférence de maillons de chaîne enchaînés les uns aux autres, de manière glissante par rapport au pot (2, 2a, 12), **caractérisé en ce que** le joint intérieur (6) est constitué en totalité ou au moins en majeure partie en polyoxyméthylène avec un indice de fusion (MFI 190/2, 16) inférieur à 6 g/ 10 mn.

2. Palier en forme de pot selon la revendication 1, **caractérisé en ce que** la pression superficielle autorisée du coussin en élastomère (3, 3b, 13) est supérieure à la valeur normative fixée et vérifiée selon DIN EN 1337/partie 5.

3. Palier en forme de pot selon la revendication 2, **caractérisé en ce que** le joint intérieur (6) étanchéifie une pression superficielle du coussin en élastomère (3, 3b, 13) de jusqu'à 2 fois la valeur normative maximale selon DIN EN 1337/partie 5.

4. Palier en forme de pot selon l'une quelconque des revendications 1 à 3, **caractérisé en ce que** le coefficient de frottement par glissement totalisé autorisé du joint intérieur (6) est supérieur à la valeur normative fixée et vérifiée selon DIN EN 1337/partie 5.

5. Palier en forme de pot selon la revendication 4, **caractérisé en ce que** le joint intérieur (6) absorbe un coefficient de frottement par glissement totalisé de jusqu'à 1,6 fois la valeur normative maximale selon DIN EN 1337/partie 5.

6. Palier en forme de pot selon l'une quelconque des revendications 1 à 5, **caractérisé en ce que** les exigences selon DIN EN 1337/partie 5 sont satisfaites à une température de -40 à 50°C.

7. Palier en forme de pot selon l'une quelconque des revendications 1 à 6, **caractérisé en ce qu'**au moins dans la zone d'étanchéité par rapport au pot (2, 2a, 12), le joint intérieur (6) est doté de graisse de silicone, notamment pour la lubrification initiale.

8. Palier en forme de pot selon la revendication 7, **caractérisé en ce que** la graisse de silicone est une huile de silicone saponifiée à base de lithium, sur base d'huile de méthylphénylsilicone.

9. Palier en forme de pot selon la revendication 7 ou la revendication 8, **caractérisé en ce que** la graisse de silicone présente les caractéristiques suivantes : point de goutte > 200°C selon DIN ISO 2176 et/ou pénétrabilité travaillée de 20 à 35 mm, notamment de 25 à 30 mm, de préférence de 26,5 à 29,5 mm selon DIN ISO 2137 et/ou une pression d'écoulement de < 200hPa à 20°C selon DIN 51805 et/ou une séparation de l'huile < 1,5 %, notamment < 1 % à 40°C et une durée de 18 heures selon DIN 51817.

10. Palier en forme de pot selon l'une quelconque des revendications 1 à 9, **caractérisé en ce que** le POM du joint intérieur (6) présente une résistance à la traction (EN ISO 527-2) d'au moins 62N/mm² et/ou une élongation à la rupture (EN ISO 527-) d'au moins 45 %.

11. Palier en forme de pot selon l'une quelconque des revendications 1 à 10, **caractérisé en ce que** le joint intérieur (6) est vulcanisé à l'intérieur du coussin en élastomère (3, 3b, 13) et ou sur celui-ci.

12. Palier en forme de pot selon l'une quelconque des revendications 1 à 10, **caractérisé en ce que** le joint intérieur (6) est relié au coussin en élastomère (3, 3b, 13) au moyen d'un agent adhésif.

13. Palier en forme de pot selon l'une quelconque des revendications 1 à 10, **caractérisé en ce que** le joint intérieur (6) est vulcanisé dans une baguette (7) élastomère qui est posée autour du coussin en élastomère (3).

14. Palier en forme de pot selon l'une quelconque des revendications 1 à 13, **caractérisé en ce que** des couples antagonistes différents sont présents autour de deux axes (X, Y) horizontaux, orthogonaux l'un par rapport à l'autre.

15. Palier en forme de pot selon la revendication 14, **caractérisé en ce que** le pot (2a) présente une section transversale en faux-rond, notamment ovale.

16. Palier en forme de pot selon l'une quelconque des revendications 1 à 15, **caractérisé en ce que** le coussin en élastomère (13) est de forme annulaire et entoure une structure centrale (K).

17. Palier en forme de pot selon la revendication 16, **caractérisé en ce que** la structure centrale (K) est creuse.

18. Palier en forme de pot selon la revendication 17, **caractérisé en ce qu'**un composant mécanique, notamment un élément de traction est passé à travers le palier.

19. Palier en forme de pot selon l'une quelconque des revendications 16 à 18, **caractérisé en ce que** le coussin en élastomère (13) est étanchéifié de manière glissante par rapport à la structure centrale (K) au moyen d'un joint (16) périphérique, lequel est constitué de préférence en maillons de chaîne enchaînés les uns aux autres, le joint (16) étant constitué en totalité ou au moins en majeure partie en polyoxyméthylène avec un indice de fusion inférieur à 8 g/ 10 mn.

20. Palier en forme de pot selon l'une quelconque des revendications 1 à 19, **caractérisé en ce qu'**il comprend une surface de glissement (G) supplémentaire, notamment avec une matière de glissement d'une résistance élevée à la pression et d'une résistance élevée au glissement.

21. Palier en forme de pot selon la revendication 20, **caractérisé en ce qu'**il comprend un guidage supplémentaire, notamment un guidage intérieur (F).

22. Palier en forme de pot selon l'une quelconque des revendications 1 à 21, **caractérisé en ce que** l'interstice annulaire restant entre le couvercle (4, 4b, 14) et le pot (2, 2a, 12) est protégé contre la pénétration d'impuretés au moyen d'un joint, notamment d'une bague d'étanchéité fixée sur le couvercle (4, 4b, 14).

23. Palier en forme de pot selon l'une quelconque des revendications 1 à 22, **caractérisé en ce qu'**il est conçu en tant que palier de levage avec un espace placé dans le pot, en-dessous du coussin en élastomère, pouvant être chargé d'une masse de remplissage durcissable par l'intermédiaire d'un canal de remplissage.

24. Utilisation d'un palier en forme de pot selon l'une quelconque des revendications 1 à 23 en tant que palier de pont.
